Europäisches Patentamt

European Patent Office

Office européen des brevets

(11) Publication number : **0 559 459 A1**

# (12) EUROPEAN PATENT APPLICATION

(21) Application number : **93301628.9**

(22) Date of filing : **04.03.93**

(51) Int. Cl.⁵ : **G08C 13/00**

(30) Priority : **04.03.92 JP 47003/92**

(43) Date of publication of application :
**08.09.93 Bulletin 93/36**

(84) Designated Contracting States :
**DE FR**

(71) Applicant : **KABUSHIKI KAISHA TOSHIBA
72, Horikawa-cho Saiwai-ku
Kawasaki-shi Kanagawa-ken Tokyo (JP)**

(72) Inventor : **Utsunomiya, Masaaki, c/o
Intll.Property Division
Toshiba Corporation, 1-1-1, Shibaura
Minato-ku, Tokyo (JP)**

(74) Representative : **Muir, Ian R. et al
HASELTINE LAKE & CO. Hazlitt House 28
Southampton Buildings Chancery Lane
London WC2A 1AT (GB)**

(54) **Signal transmission circuit.**

(57)   A signal transmission circuit having an amplifier (13, 14) for performing a negative feedback amplification on a composite signal which is a combination of a first signal and a second signal, a coupling circuit (15) for electrically coupling the second signal to the amplifier and a removing circuit (11) for removing the first signal from an output of the amplification means.

## FIG.2

The present invention relates generally to a signal transmission circuit, and more particularly, to a signal transmission circuit for transmitting signals in opposite directions.

In a VTR (video tape recorder) a signal transmission circuit for transmitting signals between the rotary moving side and the stationary side of a rotary cylinder, which contains a head switching circuit for alternately selecting heads to be connected to their associated circuits, is conventionally used.

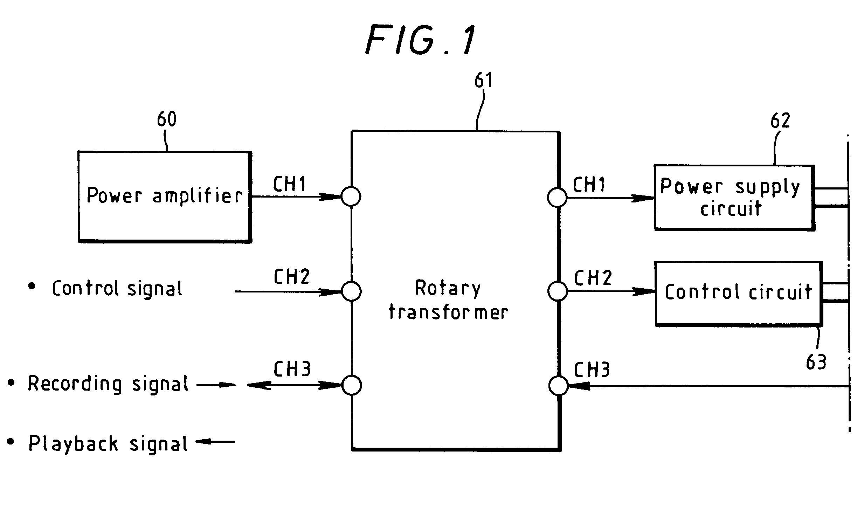

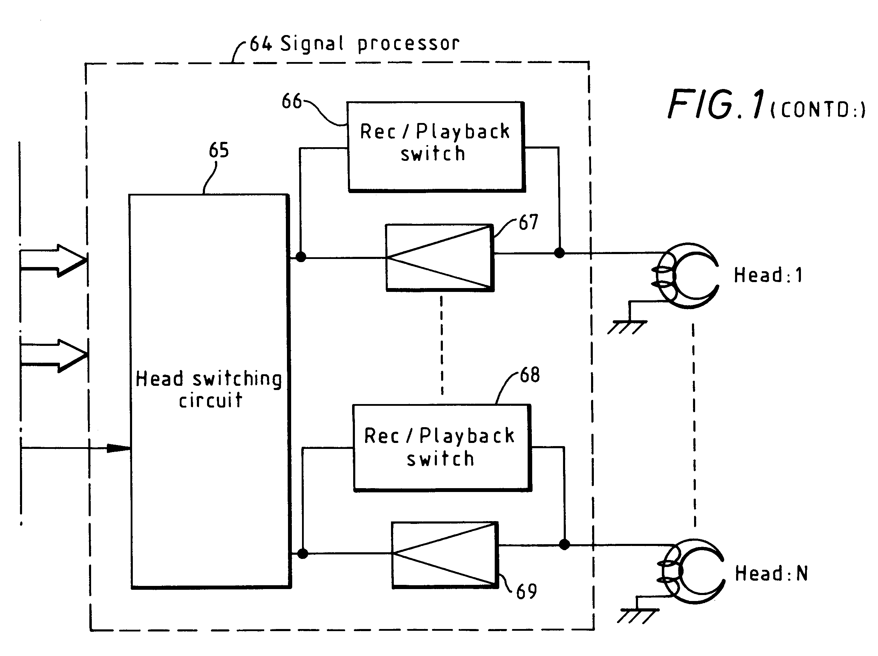

In these circuits a preamplifier built in a rotary cylinder of the VTR. In this case it was necessary to feed a control signal into the rotary cylinder for controlling the head switching circuit or the preamplifier. An example of such arrangements is shown in FIGURE 1. This arrangement was presented in the Resume P-205 of the "1985 National Meeting of Television Society (Japan)".

In FIGURE 1, an output from a power amplifier 60, a control signal, a recording signal and a playback signal are supplied to individual circuits associated with the signals in the rotary cylinder through channels CH.1, CH.2 and CH.3 of a rotary transformer 61. The output from the power amplifier 60 is supplied to a power supply circuit 62 for generating a power source to drive a signal processor 64 through the channel CH.1.

The control signal is supplied to a control circuit 63 for generating various control signals to control a signal processor 64 through the channel CH.2. The recording signal is supplied to the signal processor 64 through the channel CH.3. While the playback signal from the signal processor 64 is obtained through the channel CH.3.

The signal processor 64 includes a head switching circuit 65, a plurality of recording/playback switches such as 66 and 68 and amplifiers such as 67 and 69. In a recording operation, recording signals are supplied to the head switching circuit 65 as well as heads 1 through N via recording/playback switches 66 and 68, thus recorded on a tape (not shown). While in a playback operation a playback signal which is read by, for instance, the head 1 is supplied to the rotary transformer 61 through the amplifier 67, the head switching circuit 65 and the channel CH.3

In FIGURE 1, a video signal, an AC power and a control signal are transmitted using the three-channel rotary transformer 61. If a Hi-Fi audio signal of VHS standard is additionally required to be transmitted, the number of channels of the rotary transformer will become four (4).

If the number of channels of the rotary transformer 61 increases, crosstalks will be occurred due to interchannel interferences. In order to reduce the crosstalks, a device well-known as a short ring is normally provided between adjacent channels. Therefore, if the number of channels is four (4), in total seven grooves become necessary for the rotary transformer 61, i.e., four grooves for channel coils and three grooves for the short rings. As a result, the rotary transformer 61 becomes complicated in construction, and increases in cost.

The purpose of the head switching circuit 65 etc. built in the rotary cylinder is to reduce the crosstalk and the cost by reducing the number of channels of the rotary transformer 61 and therefore, the construction of the rotary cylinder available so far was not necessarily meeting this purpose. In other words, even when the head switching circuit 65 etc. were simply built in the rotary cylinder, it was difficult to remarkably improve the crosstalk characteristic and the cost problem by intensively reducing the number of channels for connecting circuits which electrically connect the rotary moving side with the stationary side of the rotary cylinder (for instance, a rotary transformer or slip rings).

The present invention therefore seeks to provide a signal transmission circuit with a reduced number of channels for electrically connecting the rotary moving side with the stationary side of the rotary cylinder.

A signal transmission circuit according to one aspect of the present invention includes an amplifier for performing a negative feedback amplification on a composite signal which is a combination of a first signal and a second signal, a coupling circuit for electrically coupling the second signal to the amplifier and a removing circuit for removing the first signal from an output of the amplification means.

In a second aspect of the present invention where a serial or a parallel impedance of the connecting means is not negligibly small, first loss component removing means is additionally provided to the conversion means for removing a first loss component generated by an association of the impedance of the connecting means and the second signal.

In a third aspect of the present invention where a circuit impedance between the connecting means and a reference potential source is not negligibly small, second loss component removing means is additionally provided to the amplification means for removing a second loss component generated by an association of the impedance of the connecting means and the first signal.

For a better understanding of the present invention and many of the attendant advantages thereof, reference will now be made by way of example to the accompanying drawings, wherein:

FIGURE 1 is a block diagram showing an arrangement of a conventional signal transmission circuit;

FIGURE 2 is a block diagram showing an arrangement of the signal transmission circuit of the first embodiment according to the present invention;

FIGURE 3 is a block diagram showing an arrangement of the signal transmission circuit of the second embodiment according to the present invention;

FIGURE 4 is a block diagram showing an arrangement of the signal transmission circuit of the third embodiment according to the present invention;

FIGURE 5 is a block diagram showing an arrangement of the signal transmission circuit of the fourth embodiment according to the present invention; and

FIGURE 6 is a block diagram showing an arrangement of the recording/playback signal processing system using the signal transmission circuit according to the present invention.

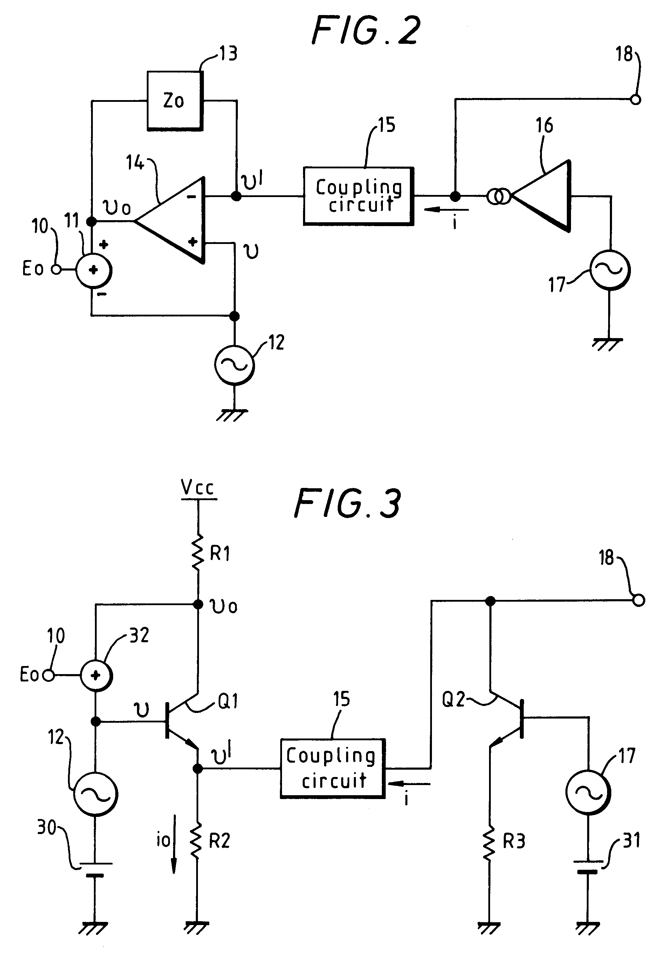

Some embodiments of the present invention will be explained hereinafter in reference to the attached drawings FIGURES 2 through 6, In these drawings same or equivalent elements will be referred by the same references.

Referring now to FIGURE 2, a first embodiment of the signal transmission circuit according to the present invention.

In FIGURE 2 a voltage v from a first signal source 12 is supplied to the non-inverted input terminal of an operational amplifier 14 and one input of a subtracter 11. An output voltage vO from the operational amplifier 14 is also supplied to another input of the subtracter 11 so that the voltage v is subtracted from the output voltage vO. Thus a subtraction resulted from the subtracter 11 is introduced to a first output terminal 10. In addition, the output voltage vO from the operational amplifier 14 is fed back to the inverted input terminal of the operational amplifier 14 through an impedance circuit 13 having an impedance ZO in a negative fashion. The inverted input terminal of the operational amplifier 14 is connected to a second output terminal 18 and the output terminal of a current output amplifier 16 through a coupling circuit 15. In addition a second signal source 17 is connected to the input terminal of the amplifier 16.

Now, the operation of the signal transmission circuit as shown in FIGURE 2 will be explained below. A voltage v' appearing on the inverted input terminal of the operational amplifier 14 is of the same potential as the voltage v on the non-inverted input terminal.

In this embodiment, as the impedance of the coupling circuit 15 is negligibly small and the output impedance of the amplifier 16 is extremely large, the voltage v, i.e., the output signal from the first signal source 12 is transmitted to the second output terminal 18.

An output current i from the amplifier 16 is supplied to the output terminal of the operational amplifier 14 through the coupling circuit 15 and the impedance circuit 13. Therefore, the output voltage vO on the output terminal of the operational amplifier 14 is represented by the following Equation (1):

$$vO = v' + ZO \times i$$

$$= v + ZO \times i \qquad\qquad \ldots\ldots (1)$$

In the subtracter 11, the voltage v is subtracted from the output voltage vO, thereby producing a signal EO. This operation is represented by the following Equation (2):

$$EO = vO - v = ZO \times i \quad (2)$$

Thus the output signal i from the second signal source 17 appears on the first output terminal 10. That is, the output signal from the first signal source 12 appears on the second output terminal 18 while the second signal i from the second signal source 17 appears on the first output terminal 10.

Referring now to FIGURE 3, a second embodiment of the signal transmission circuit according to the present invention will be explained.

In FIGURE 3 the first signal source 12 is offset by a DC voltage source 30 and its output signal is supplied to the base of an NPN transistor Q1 and an adder 32. The collector of the transistor Q1 is connected to the adder 32 and also to a voltage source Vcc. The output from the adder 32 is supplied to the first output terminal 10. The emitter of the transistor Q1 is connected to the reference potential source through a resistor R2 and to the collector of an NPN transistor Q2 and the second output terminal 18. The second signal source 17 that is offset by a DC voltage source 31 is connected to the base of this transistor Q2 and the emitter of the transistor Q2 is connected to the reference potential source through a resistor R3.

Now, the operation of the signal transmission circuit as shown in FIGURE 3 will be explained below. The voltage v on the base of the transistor Q1 corresponds to the output of the first signal source 12. This voltage v is substantially of the same potential as the voltage v' on the emitter of the transistor Q1. And, as the collector of the transistor Q2 is at low impedance, the voltage v' or the voltage v directly appears on the second output terminal 18.

The current i flowing through the resistor R3 is controlled by the base voltage of the transistor Q2. This current i is supplied from the voltage source Vcc and flows into the reference potential source after flowing through a resistor R1, the transistor Q1, the coupling circuit 15 and the transistor Q2.

Assuming the current flowing through the resistor R2 as iO and the collector voltage of the transistor Q1 as vO, the voltages v and vO are represented by the following Equations (3) and (4):

$$v \simeq v' = R2 \cdot iO \quad (3)$$

$$vO = Vcc - R1(i + iO)$$

$$= Vcc - R1 \cdot i - (R1/R2) \cdot v$$

$$= Vcc - R1 \cdot i - v \qquad \ldots\ldots (4)$$

where, R1 = R2. Therefore, the signal EO from the subtracter 11 is represented by the following Equation (5):

$$EO = vO + v = Vcc - R1 \cdot i \quad (5)$$

As the values of the Vcc and the R1 are constant, the value of the EO is controlled by the current i and the output signal of the second signal source 17 appears on the first output terminal 10. That is, similar to the first embodiment, the output signal from the first signal source 12 appears on the second output terminal 18 and that from the second signal source appears on the first output terminal 10.

Now, the third embodiment of the signal transmission circuit according to the present invention will be explained.

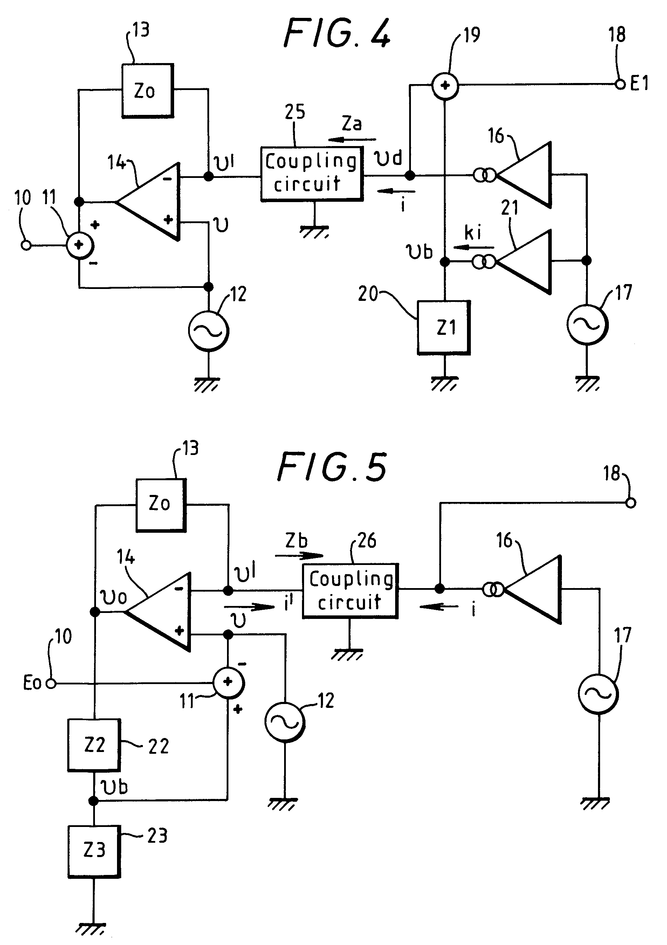

FIGURE 4 shows an arrangement of the signal transmission circuit of the third embodiment according to the present invention. This embodiment is in the case where the coupling circuit 15 in the first embodiment is not an ideal coupling circuit and serial or parallel impedance is not negligibly small. Therefore, an impedance Za component is seen from the amplifier 16 side and the circuit including the operational amplifier 14 on the left side of a coupling circuit 25 in FIGURE 4 is the same as that shown in FIGURE 2.

The output from the second signal source 17 is supplied to the current output amplifier 16 as well as another current output amplifier 21. Upon receipt of this signal, the current i is output from the amplifier 16 and a current ki is output from the amplifier 21 (where, O < k < 1). The voltage va on the output terminal of the amplifier 16 is represented by the following Equation (6).

$$va = v' - Za \cdot i = v - Za \cdot i \quad (6)$$

The output from the amplifier 21 is converted into the voltage vb by an impedance circuit 20 having an impedance Z1. Then, a voltage E1 is supplied to the second output terminal 18 as the voltages va and vb are added together in an adder 19. This operation is represented by the following Equation (7).

$$E1 = va + vb = va + Z1 \cdot ki$$

$$= v - Za \cdot i + Z1 \cdot ki \qquad \ldots\ldots (7)$$

The impedance Za component can be removed by regulating the impedance Z1 and the coefficient k so that Za·i becomes equal to Z1·ki (i.e., Za·i = Z1·ki) in the Equation (7). As a result, the output of the first signal source 12 comes to appear on the second output terminal 18.

Now, the fourth embodiment of the signal transmission circuit according to the present invention will be explained.

FIGURE 5 shows an arrangement of the circuit of the fourth embodiment according to the present invention. This fourth embodiment is in the case where the coupling circuit in the first embodiment shown in FIGURE 2 is not an ideal coupling circuit and the impedance component generating between the coupling circuit and the reference potential source is not negligibly small and therefore, an impedance Zb component is seen from the operational amplifier 14 side. In this case, the circuit including the amplifier 16 on the right side of the coupling circuit in FIGURE 5 is the same as that shown in FIGURE 2.

The output voltage vO of the operational amplifier 14 as shown in in FIGURE 5 is represented by the following Equation (8):

$$vO = \{(ZO + Zb)/Zb)\} \cdot v + ZO \cdot i' \quad (8)$$

where, i' is a current controlled by the second signal source 17 and $i \geq i'$.

As the Equation (8) is compared with the Equation (1), it is seen that gain as to the voltage v has become larger than that in the first embodiment. It is therefore necessary to remove the impedance Zb component in addition to remove the impedance component of the first signal source 12 from the output voltage vO as in the first embodiment. Here, by subtracting the voltage vb, that was obtained by dividing the output voltage vO in the impedance circuits 22 and 23, from the voltage v by the subtracter 11, the output component from the second signal source 17 is obtained. This operation is shown by the following Equation (9). Further, the values of the impedance circuits 22 and 23 are given as Z2 and Z3, respectively.

$$vb = (Z3/Z2 + Z3) \cdot vO \quad (9)$$

Here, if Z2 = ZO and Z3 = Zb are valid, the following Equation (10) is established.

$$vb = \{Z3/(Z2 + Z3)\} \cdot vO$$
$$= \{Zb/(ZO + Zb)\} \times \{(ZO + Zb)/Zb\} \cdot v + ZO \cdot i'$$
$$= v + \{Zb \cdot ZO/(ZO + Zb)\} \cdot i' \qquad \ldots \ldots (10)$$

Accordingly, the voltage EO on the first output terminal 10 is represented by the following Equation (11).

$$EO = vb - v$$
$$= (Zb \cdot ZO/(ZO + Zb)\} \cdot i' \qquad \ldots \ldots (11)$$

From the Equation (11) it is seen that the first output terminal 10 is free from the influence of the first signal source 12 and is supplied with the signal controlled by the second signal source 17.

Further, the influence of the impedance Zb can be reduced by making the impedance ZO sufficiently small in compared to the impedance Zb. In addition, as it is possible for the impedance circuit to use the collector resistance of transistors if the operational amplifier 14 is composed of transistors as shown in FIGURE 3, the influence of the impedance Zb can be coped with only by adding the impedance circuit 23.

The embodiments of the signal transmission circuit have been so far explained. An example of the signal transmission circuit used in an actual VTR will be explained in the following.

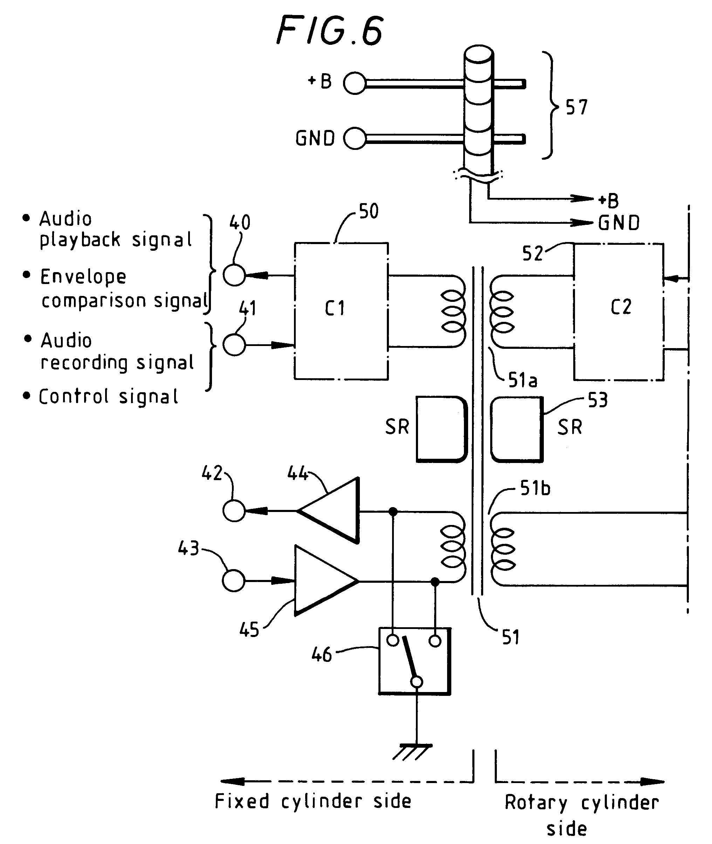

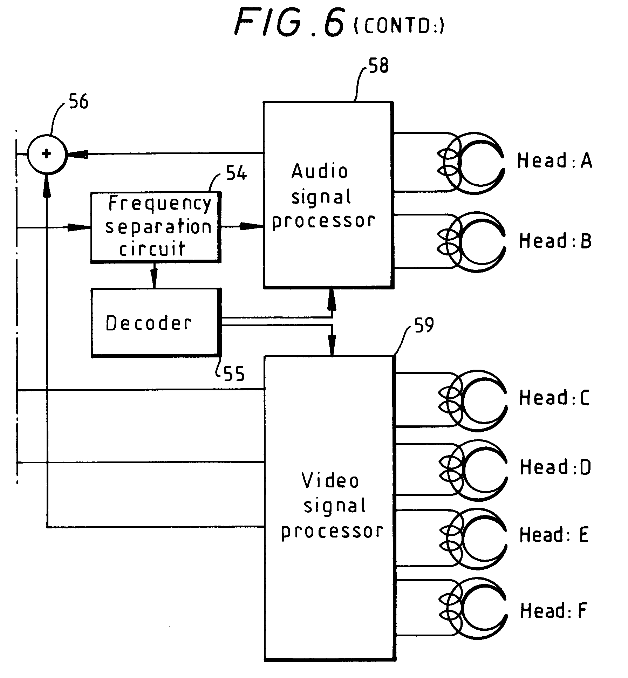

Referring now to FIGURE 6, one application of the signal transmission circuit as explained above will be discussed, based on a recording/playback signal processing system in VTRs.

In FIGURE 6, a video signal to be recorded, which is introduced on a terminal 43, is supplied to a video signal processor 59 through an amplifier 45 and a rotary transformer 51b. Then the video signal is recorded on a video tape (not shown) using heads C through F. While video signals recorded on the video tape are played back from the heads C through F, and then supplied to a terminal 42 through the video signal processor 59, the rotary transformer 51b and an amplifier 44.

Further, a mixed signal of a Hi-Fi audio signal and a control signal is supplied to a terminal 41. This mixed signal is supplied to a second signal transmission circuit 52 through a first signal transmission circuit 50 and a rotary transformer 51a. The rotary transformer 51a is equivalent to the coupling circuits 15 and 25 as well as a coupling circuit 26 in FIGURE 5.

The output from the second signal transmission circuit 52 is supplied to a frequency separation circuit 54 where the audio signal and the control signal are separated each other and supplied to an audio signal processor 58 and a decoder 55, respectively. The output of the audio signal processor 58 is recorded on a tape (not shown) through heads A and B. Further, the control signal output from the decoder 55 is supplied to the audio signal processor 58 and the video signal processor 59 and used for control of the respective processors 58 and 59.

In the playback operation of audio signals, the signals read from the heads A and B are supplied to an adder 56 through the audio signal processor 58. An envelope comparison signal from the video signal processor 59 is also supplied to the adder 56 where the envelope comparison signal is added to the audio signals. An output from the adder 56 is supplied to the first signal transmission circuit 50 through the second signal transmission circuit 52 and the rotary transformer 51a. Thus the control signal component supplied from the terminal 41 is removed and output to a terminal 40.

In order to reduce crosstalks, a short ring (SR) 53 is provided between the rotary transformers 51a and 51b. Further, the supply voltage (+B) and reference potential source (GND) are supplied from a brush 57 to various parts of the rotary cylinder side.

In the arrangement as mentioned above, signals are transmitted in opposite directions only in the playback operation of the audio signals. In this case, the control signal is supplied from the stationary cylinder side, while the audio signals and the envelope comparison signal are supplied from the rotary cylinder side.

In the first signal transmission circuit 50, the audio signals with the control signal component are removed and the envelope comparison signal are taken out. Further in the second signal transmission circuit 52, the audio signals and the control signal are taken out in free from the influence of the envelope comparison signal. Thus, it becomes possible to transmit these signals in opposite directions through the same channel.

As described above, these signals are transmitted in opposite directions. When both of the signal components appear in the signal take-out part, all components other than signals to be taken out are removed. Thus, it is possible to transmit the signals in opposite directions without a transmission loss and to reduce the number of channels of transmission lines. As a result, it becomes possible to reduce crosstalks and/or costs or to miniaturize the size of components in equipments such as VTRs, etc.

As described above, the present invention can provide an extremely preferable signal transmission circuit.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example for the purposes of a divisional application.

## Claims

1. A signal transmission circuit for transmitting signals in opposite directions characterised in that the circuit comprises:

   amplification means (13, 14) for performing a negative feedback amplification on a composite signal which is a combination of a first signal and a second signal;

   means (15) for electrically coupling the second signal to the amplification means; and

   means (11) for removing the first signal from an output of the amplification means.

2. A signal transmission circuit as claimed in claim 1, further comprising a first means (19, 20, 21) for removing a first loss component yielded based on an effect between an impedance of the coupling means and the second signal flowing through the coupling means from the second signal.

3. A signal transmission circuit as claimed in claim 1, further comprising a second means (11, 22, 23) for removing a second loss component yielded based on an effect between a circuit impedance of the coupling means to a reference potential source and the first signal flowing through the coupling means from the first signal.

4. A signal transmission circuit in which a first signal is transmitted in a first direction and a second signal is transmitted in a second direction through coupling means,

   characterised in that the circuit also comprises:

   a combining circuit for forming a composite signal (Vo) which is a combination of the first and second signals; and

   a circuit for deriving from the composite signal a signal representative of the second signal.

5. A signal transmission circuit as claimed in claim 4 characterised in that said combining circuit comprises an operational amplifier having an impedance Z connected between its inverting input and its output, the first signal being supplied to the non-inverting input of the operational amplifier, and the second signal being supplied to the inverting input of the operational amplifier through the coupling means.

6. A signal transmitting circuit as claimed in claim 5 characterised in that the circuit for deriving the second signal from the composite signal comprises a subtracter supplied with the composite signal (Vo) and the first signal (V).

7.  A signal transmitting circuit as claimed in claim 4 characterised in that the combining circuit comprises a transistor wherein the current through the transistor is affected by the second signal and the first signal is coupled to the base of the transistor.

8.  A signal transmitting circuit as claimed in claim 7 wherein the circuit for deriving the second signal from the composite signal comprises an adder circuit which is supplied by the voltage at the collector of the transistor as the composite signal and the first signal.

# FIG.1

FIG.1 (CONTD.)

64 Signal processor

66 Rec/Playback switch

65 Head switching circuit

67

Head:1

68 Rec/Playback switch

69

Head:N

# FIG.2

# FIG.3

# FIG. 4

# FIG. 5

# FIG.6

+B ○
GND ○
57

→ +B
→ GND

• Audio
  playback signal
• Envelope
  comparison signal
• Audio
  recording signal
• Control signal

40
41

50

C1

52

C2

51a

SR
53 SR

42
44
43
45
46

51b

51

Fixed cylinder side

Rotary cylinder
side

EP 0 559 459 A1

# FIG.6 (CONTD:)

Head: A

Head: B

Head: C

Head: D

Head: E

Head: F

13

European Patent
Office

**EUROPEAN SEARCH REPORT**

Application Number

| | DOCUMENTS CONSIDERED TO BE RELEVANT | | EP 93301628.9 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | <u>DE - A - 3 616 711</u><br>(SIEMENS)<br>* Totality * | 1 | G 08 C 13/00 |
| A | <u>DE - A - 3 616 709</u><br>(SIEMENS)<br>* Totality * | 1 | |
| A | <u>DE - A - 3 721 494</u><br>(METZ-WERKE GMBH)<br>* Abstract; column 1, line<br>50 - column 2, line 35; fig.<br>1; claim 1 * | 1 | |
| | | | **TECHNICAL FIELDS SEARCHED (Int. Cl.5)**<br><br>G 08 C<br>G 01 R<br>H 03 K |

The present search report has been drawn up for all claims

| Place of search | Date of completion of the search | Examiner |
|---|---|---|
| VIENNA | 28-05-1993 | GRÖSSING |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P0401)